(19)

**Europäisches Patentamt**
**European Patent Office**
**Office européen des brevets**

(11) **EP 1 716 682 B1**

(12) **EUROPEAN PATENT SPECIFICATION**

(45) Date of publication and mention
of the grant of the patent:
**23.01.2008 Bulletin 2008/04**

(51) Int Cl.:
*H04L 27/00* (2006.01)    *H04L 27/34* (2006.01)
*H04B 7/185* (2006.01)

(21) Application number: **04712818.6**

(22) Date of filing: **19.02.2004**

(86) International application number:
**PCT/US2004/004702**

(87) International publication number:
**WO 2005/086444 (15.09.2005 Gazette 2005/37)**

(54) **METHOD AND APPARATUS FOR CARRIER RECOVERY IN A COMMUNICATIONS SYSTEM**

VERFAHREN UND VORRICHTUNG ZUR TRÄGERRÜCKGEWINNUNG IN EINEM
KOMMUNIKATIONSSYSTEM

PROCEDE ET DISPOSITIF POUR RECUPERATION DE PORTEUSE DANS UN SYSTEME DE
COMMUNICATION

(84) Designated Contracting States:
**DE ES FR GB IT**

(43) Date of publication of application:
**02.11.2006 Bulletin 2006/44**

(73) Proprietor: **Thomson Licensing
92100 Boulogne-Billancourt (FR)**

(72) Inventor: **KOSLOV, Joshua
Hopewell, NJ, 08525 (US)**

(74) Representative: **Esselin, Sophie et al
MARKS & CLERK France
Conseils en Propriété Industrielle
31-33, avenue Aristide Briand
94117 Arcueil Cedex (FR)**

(56) References cited:
**EP-A- 1 313 279        WO-A-02/089371
WO-A-03/101034        US-A1- 2002 067 779
US-A1- 2003 123 595**

Printed by Jouve, 75001 PARIS (FR)

**Description**

BACKGROUND OF THE INVENTION

The present invention generally relates to communications systems and, more particularly, to satellite-based communications systems.

In a layered modulation based communication system, a transmitter modulates at least two data-bearing signals, e.g., an upper layer (UL) signal and a lower layer (LL) signal, onto the same carrier or different carriers (possibly asynchronously with each other) and transmits the UL signal and the LL signal separately via two transponders such that the LL signal is transmitted at a much lower power level than the UL signal. This transmission may take the form of an uplink transmission to a satellite, which then provides a downlink transmission (which is typically at a different frequency than the uplink transmission) to a receiver. The latter processes the downlink transmission - the received signal - for recovery of the data transported therein to, e.g., provide a selected movie for viewing on a television (TV) set coupled thereto.

At the receiver, the received signal has a UL signal component and a LL signal component, i.e., the received signal is a combination of the upper and lower layers, and the receiver processes the received signal to recover therefrom the upper layer data (conveyed in the UL signal component) and the lower layer data (conveyed in the LL signal component). With respect to recovery of the upper layer data - since the power level of the UL signal is much higher than the LL signal - the receiver simply demodulates and processes the received signal as if it were only composed of the UL signal component plus channel noise - in effect treating the LL signal component of the received signal as noise. In comparison, since the power level of the LL signal is lower, the receiver processes the received signal to first extract therefrom the LL signal component. The receiver then processes the extracted LL signal component to recover the lower layer data.

In order to extract the LL signal component, the receiver regenerates the UL signal and subtracts the regenerated UL signal from the received signal. In this regard, the receiver utilizes various signals already available from processing the upper layer such as a recovered UL carrier as well as the recovered upper layer data. The latter is re-encoded and re-mapped to symbols to form the regenerated UL signal at baseband, i.e., the symbols of the regenerated UL signal have no phase or frequency offsets associated with them. As such, the recovered UL carrier is used to first derotate the received signal to remove the UL carrier therefrom. The extracted LL signal component is then formed by subtracting the regenerated UL signal from the derotated version of the received signal. The recovered UL carrier is developed by a carrier recovery process driven by hard decisions, e.g., phase errors between respective received signal points and sliced symbols (nearest symbols) taken from the UL symbol constellation.

SUMMARY OF THE INVENTION

As noted above, the recovered carrier is developed by a carrier recovery process driven by hard decisions. However, I have observed that generating a derotated version of the received signal by using such a recovered carrier may additionally degrade the lower layer signal component - thus, further impeding accurate recovery of the lower layer data. Therefore, and in accordance with the principles of the invention, a receiver receives a layered modulation signal having at least two signal layers, and recovers a carrier therefrom as a function of soft decisions with respect to one of the at least two layers.

In an embodiment of the invention, a satellite communications system comprises a transmitter, a satellite transponder and a receiver. The transmitter transmits an uplink layered modulation signal having an upper layer and a lower layer to the satellite transponder, which broadcasts the layered modulation signal downlink to one, or more, receivers. The receiver receives the layered modulation signal (the received signal) and performs demodulation and decoding of the lower layer signal component thereof by using a recovered carrier to derotate the received signal, wherein the recovered carrier is developed by a carrier recovery process driven by soft decisions with respect to the upper layer signal component of the received signal.

BRIEF DESCRIPTION OF THE DRAWINGS

FIG. 1 shows an illustrative satellite communications system embodying the principles of the invention;
FIG. 2 shows a prior art layered modulator for use in transmitter 5 of FIG. 1;
FIG. 3 shows a prior art carrier recovery circuit;
FIG. 4 shows a prior art loop filter;
FIG. 5 illustrates a prior art hard decision process with respect to a received signal point and a constellation space having four symbols;
FIG. 6 shows an illustrative block diagram of a receiver in accordance with the principles of the invention;

FIG. 7 shows an illustrative block diagram of demodulator/decoder 320 of FIG. 5 in accordance with the principles of the invention;

FIG. 8 shows an illustrative block diagram of demodulator 330 of FIG. 6;

FIG. 9 shows an illustrative block diagram of a soft-decision based carrier recovery circuit in accordance with the principles of the invention;

FIG. 10 shows an illustrative block diagram of demodulator 375 of FIG. 6;

FIG. 11 shows an illustrative flow chart in accordance with the principles of the invention; and

FIG. 12 shows another illustrative embodiment in accordance with the principles of the invention.

## DETAILED DESCRIPTION

Other than the inventive concept, the elements shown in the figures are well known and will not be described in detail. Also, familiarity with satellite-based systems is assumed and is not described in detail herein. For example, other than the inventive concept, satellite transponders, downlink signals, symbol constellations, phase-locked loops (PLLs), a radio-frequency (rf) front-end, or receiver section, such as a low noise block downconverter, formatting and encoding methods (such as Moving Picture Expert Group (MPEG)-2 Systems Standard (ISO/IEC 13818-1)) for generating transport bit streams and decoding methods such as log-likelihood ratios, soft-input-soft-output (SISO) decoders, Viterbi decoders are well-known and not described herein. In addition, the inventive concept may be implemented using conventional programming techniques, which, as such, will not be described herein. Finally, like-numbers on the figures represent similar elements.

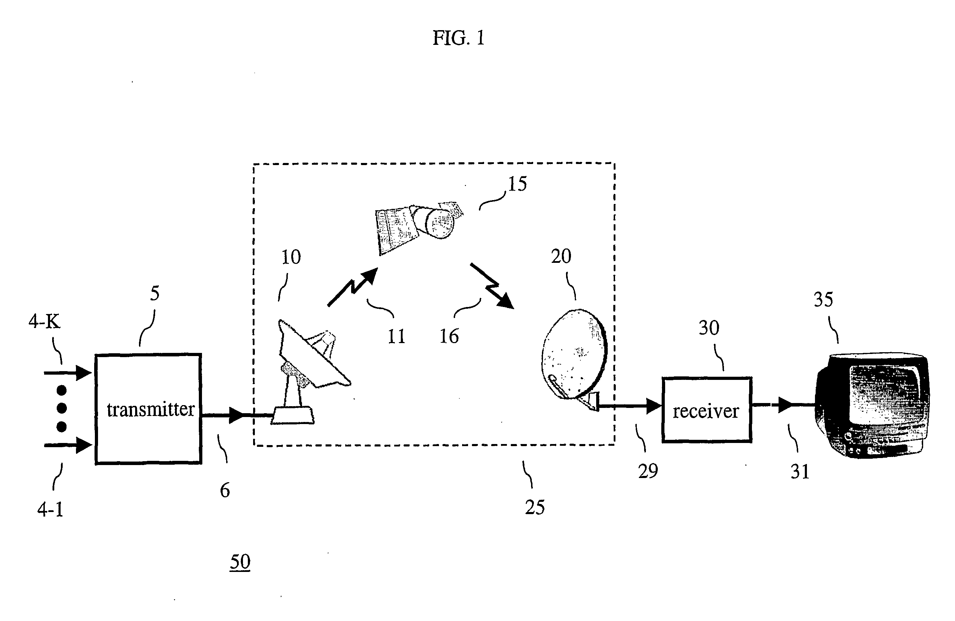

An illustrative communications system 50 in accordance with the principles of the invention is shown in FIG. 1. Communications system 50 includes transmitter 5, satellite channel 25, receiver 30 and television (TV) 35. Although described in more detail below, the following is a brief overview of communications system 50. Transmitter 5 receives a number of data streams as represented by signals 4-1 through 4-K and provides a layered modulation signal 6 to satellite transmission channel 25. Illustratively, these data streams represent control signaling, content (e.g., video), etc., of a satellite TV system and may be independent of each other or related to each other, or a combination thereof. The layered modulation signal 6 has $K$ layers, where $K \geq 2$. It should be noted that the words "layer" and "level" are used interchangeably herein. Satellite channel 25 includes a transmitting antenna 10, a satellite 15 and a receiving antenna 20. Transmitting antenna 10 (representative of a ground transmitting station) provides layered modulation signal 6 as uplink signal 11 to satellite 15, which provides for retransmission of the received uplink signal via downlink signal 16 (which is typically at a different frequency than the uplink signal) to a broadcast area. This broadcast area typically covers a predefined geographical region, e.g., a portion of the continental United States. The downlink signal 16 is received by receiving antenna 20, which provides a received signal 29 to receiver 30, which demodulates and decodes received signal 29 in accordance with the principles of die invention to provide, e.g., content to TV 35, via signal 31, for viewing thereon. It should be noted that although not described herein, transmitter 5 may further predistort the signal before transmission to compensate for non-linearities in the channel. In the remainder of this description it is illustratively assumed that there are two data streams, i.e., $K = 2$. It should be noted that the invention is not limited to $K = 2$ and, in fact, a particular data stream such as signal 4-1 may already represent an aggregation of other data streams (not shown).

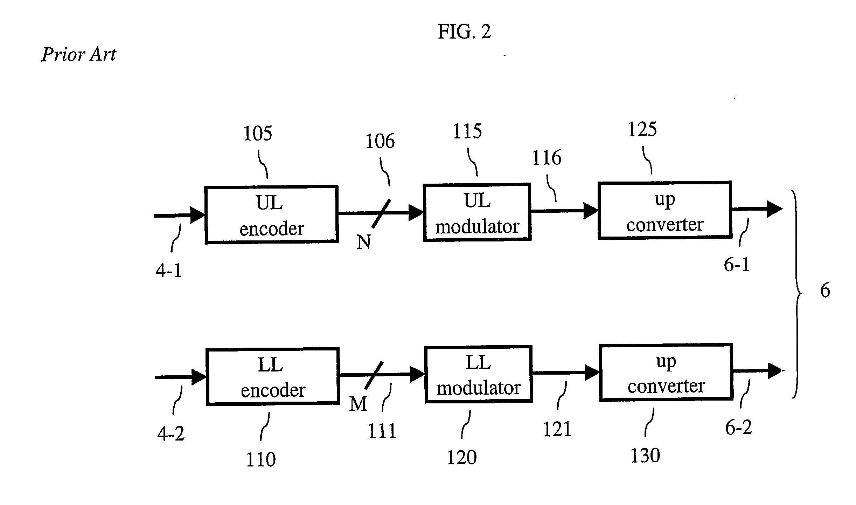

An illustrative block diagram of a prior art layered modulator for use in transmitter 5 of FIG. 1 is shown in FIG. 2. Here, transmitter 5 comprises two separate transmitter paths. The upper layer (UL) path includes UL encoder 105, UL modulator 115 and up converter 125. The lower layer (LL) path includes LL encoder 110, LL modulator 120 and up converter 130. As used herein, the term "UL signal" refers to any signal in the UL path and will be apparent from the context. For example, in the context of FIG. 2, this is one or more of the signals 4-1, 106 and 116. Similarly, the term "LL signal" refers to any signal in the LL path. Again, in the context of FIG. 2, this is one of more of the signals 4-2, 111 and 121. Further, each of the encoders implement known error detection/correction codes (e.g., convolutional or trellis codes; concatenated forward error correction (FEC) scheme, where a rate 1/2, 2/3, 4/5 or 6/7 convolutional code is used as an inner code, and a Reed Solomon code is used as an outer code; LDPC codes (low density parity check codes); etc.). For example, UL encoder 105 may use a convolutional code or a short block code; while LL encoder 110 may use a turbo code or LDPC code. For the purposes of this description it is assumed that both UL encoder 105 and LL encoder 110 use an LDPC code. In addition, a convolutional interleaver (not shown) may also be used.

As can be observed from FIG. 2, signal 4-2 is applied to LL encoder 110, which provides an encoded signal 111. Likewise, signal 4-1 is applied to an UL encoder 105, which provides an encoded signal 106. Encoded signal 106 represents $N$ bits per upper layer symbol interval $T_{UL}$; while encoded signal 111 represents $M$ bits per lower layer symbol interval $T_{LL}$, where $N$ may, or may not, equal $M$ and $T_{UL}$ may, or may not, equal $T_{LL}$. Typically, in the context of LDPC coding, each encoded signal represents the applied data stream plus parity bits. Modulators 115 and 120 map and modulate the respective signals applied thereto to provide modulated signals 116 and 121, respectively. Illustratively, modulators 115 and 120 perform quadrature phase-shift keying (QPSK) modulation. It should be noted that since there are two modulators, 115 and 120, the modulation can be different in the UL path and the LL path as well as the carrier frequencies for the upper layer and the lower layer. Modulated signals 116 and 121 are then upconverted to the appropriate frequency band by up converters 125 and 130, respectively. It should be observed from FIG. 2 that transmitter 5 transmits two signals, i.e., layered modulation signal 6 comprises UL signal 6-1 and LL signal 6-2. Typically, LL signal 6-2 is transmitted at a lower power level than UL signal 6-1.

A method for transmitting layered signals and receiving, demodulating and decoding layered transmitted signals in a multi-level transmission scheme is disclosed in international application WO 02/089371 A1 (HUGHES ELECTRONICS CORPORATION) 7 November 2002 (07.11.2002).

Since the power level of the LL signal is lower, this also effectively lowers the SNR (signal-to-noise ratio) for the LL path. In this regard, I have observed that the lower SNR associated with the LL signal can be further reduced by the receiver during processing of the received signal. In particular, if the LL signal component of the received signal is processed, e.g., derotated, by a recovered carrier derived from a hard decision based carrier recovery circuit operating on the combined signal, additional, undesired, phase jitter may be added to the LL signal component.

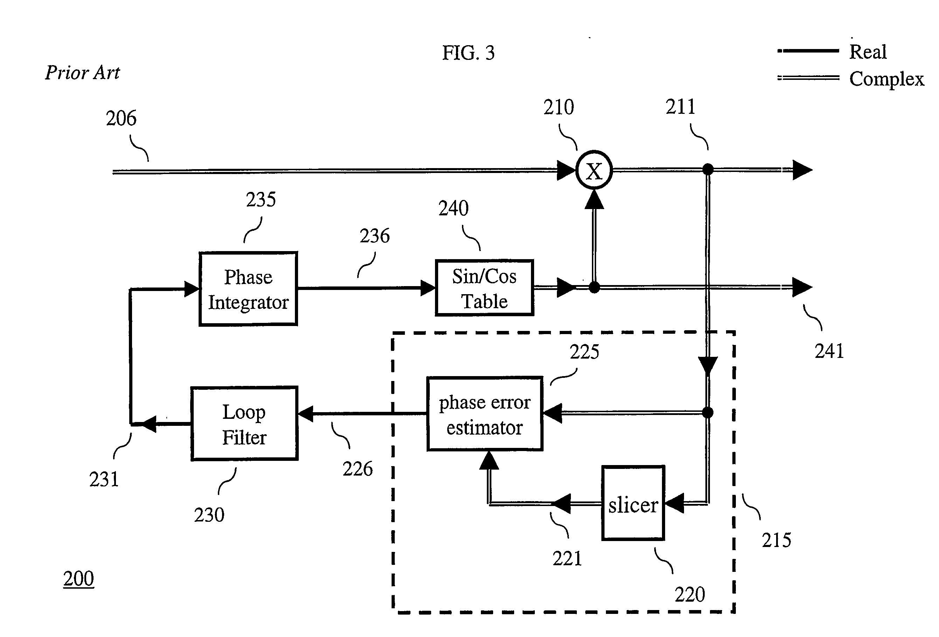

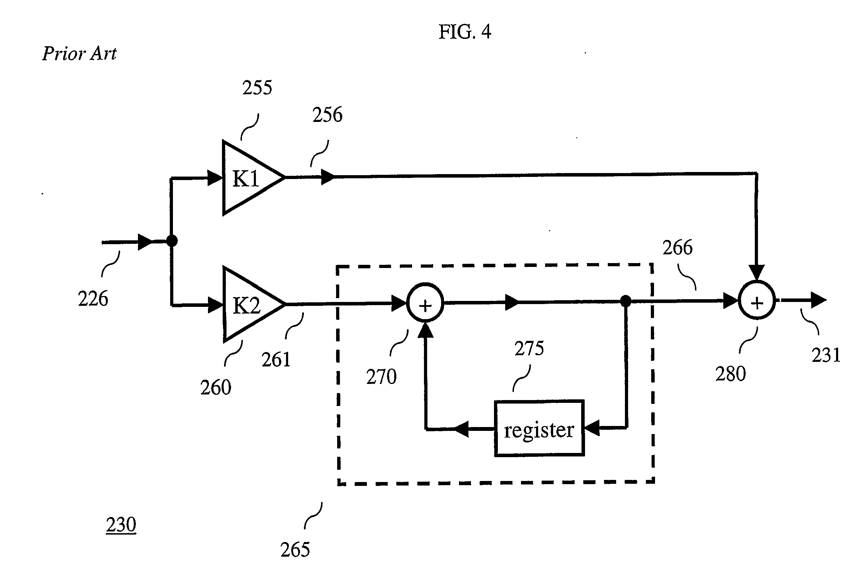

For example, consider the prior art carrier recovery circuit 200 of FIG. 3 for use in a receiver for an illustrative received signal 206 modulated at a carrier frequency, $f_c$. It should be noted that received signal 206 may be the result of other processing (not shown) in the receiver, e.g., downconversion, band-pass filtering, etc. Further, it is assumed that received signal 206, and the processing illustrated by FIG. 3, is in the digital domain (although this is not required), i.e., the carrier recovery circuit 200 includes a digital phase-locked loop (DPLL) driven by hard decisions. Carrier recovery circuit 200 includes complex multiplier 210, phase error detector 215, loop filter 230, phase integrator 235 and sine/cosine (sin/cos) table 240. The received signal 206 is a complex sample stream comprising in-phase (1) and quadrature (Q) components. It should be noted that complex signal paths are specifically shown as double lines in FIG. 3. Complex multiplier 210 receives the complex sample stream of received signal 206 and performs de-rotation of the complex sample stream by recovered carrier signal 241. In particular, the in-phase and quadrature components of received signal 206 are rotated by a phase of recovered carrier signal 241, which represents particular sine and cosine values provided by sin/cos table 240 (described below). The output signal from complex multiplier 210 is a down-converted received signal 211, e.g., at baseband, and represents a de-rotated complex sample stream of received signal points. As can be observed from FIG. 3, down-converted received signal 211 is also applied to phase detector 215, which computes any phase offset still present in the down-converted signal 211 and provides a phase error estimate signal 226 indicative thereof. The phase error estimate signal 226 is applied to loop filter 230, which further filters the phase error estimate signal 226 to provide a filtered signal 231 that is applied to phase integrator 235. A block diagram of loop filter 230 is shown in FIG. 4. Loop filter 230 includes first order gain element 255, second order gain element 260, second order integrator 265 and combiner 280. Second order integrator 265 includes combiner 270 and register 275. Phase error estimate signal 226 is applied to both first order gain element 255 and second order gain element 260. The output signal 256 from first order gain element 255 is applied to combiner 280. The output signal 261 from second order gain element 260 is applied to second order integrator 265, which integrates the signal applied thereto (via combiner 270 and register 275) to provide output signal 266. Combiner 280 adds output signal 256 and output signal 266 to provide filtered signal 231. Referring back to FIG. 3, phase integrator 235 further integrates filtered signal 231 and provides an output phase angle signal 236 to sin/cos table 240, which provides the associated sine and cosine values to complex multiplier 210 for de-rotation of received signal 206 to provide down-converted received signal 211. Although not shown for simplicity, a frequency offset, $F_{OFFSET}$, may be fed to loop filter 230, or phase integrator 235, to increase acquisition speed. Also, it should be noted that carrier recovery circuit 200 may operate at multiples of (e.g., twice) the symbol rate of received signal 206. As such, phase integrator 235 continues to integrate at all sample times.

It should be noted that phase detector 215 includes two elements: phase error estimator 225 and slicer 220. As known in the art, the latter makes a hard decision as to the possible symbol (target symbol) represented by the in-phase and quadrature components of each received signal point of down-converted signal 211. In particular, for each received signal point of down-converted signal 211, slicer 220 selects the closest symbol (target symbol) from a predefined constellation of symbols. As such, the phase error estimate signal 226 provided by phase error estimator 225 represents the phase difference between each received signal point and the corresponding target symbol. In particular, phase error estimate signal 226 represents a sequence of phase error estimates, $\phi_{error\_estimate}$, where each particular $\phi_{error\_estimate}$ is determined by calculating the imaginary part of the received signal point times the conjugate of the associated sliced symbol, i.e.,

$$\phi_{error\_estimate} \cong imag(z \bullet z^*_{sliced}) = |z| \bullet |z_{sliced}| \sin(\angle z - \angle z_{sliced}). \qquad (1)$$

In the above equation, Z represents the complex vector of the received signal point, $Z_{sliced}$ represents the complex vector of the associated sliced signal point and $z^*_{sliced}$ represents the conjugate of the complex vector of the associated sliced signal point. However, at low SNR ratios, these phase error estimates provided by phase detector 215 may be incorrect, due to received signal points being sliced into incorrect target symbols.

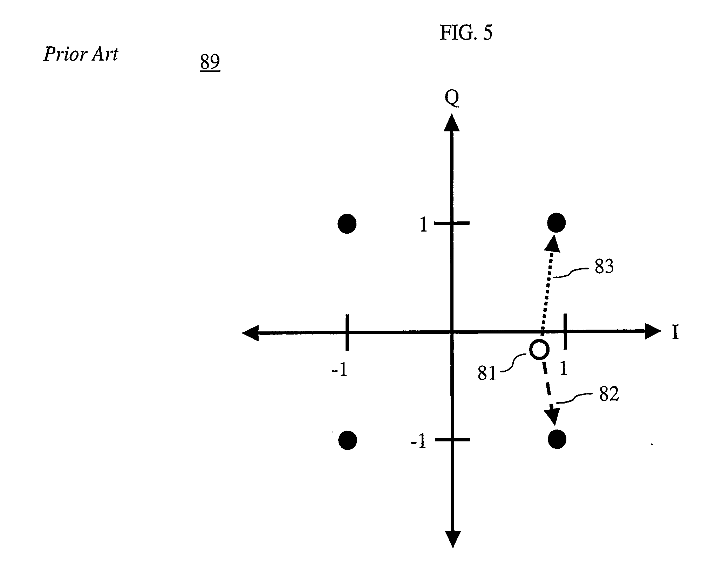

For example, consider the QPSK constellation 89 shown in FIG. 5. QPSK constellation 89 has four symbols: (1, 1), (1, -1), (-1, -1) and (-1, 1). A transmitted symbol of value (1, 1) may have noise added by the channel such that the received value at the receiver is, e.g., (0.8, -0.1), as represented by received signal point 81. As such, slicer 220 would select symbol (1, -1) as the target symbol (as indicated by dashed line arrow 82) instead of the correct symbol (1, 1) (as indicated by dotted line arrow 83). As a result, the phase error estimate between the received signal point and the target symbol would be wrong. This, in turn, introduces unwanted phase jitter into recovered carrier signal 241 with the result that the down-converted received signal 211 is degraded by the incorrect decisions made within carrier recovery circuit 200. In the context of layered modulation, since the upper level is at a higher power level, the upper layer error correction circuitry (not shown) may well be capable of perfectly decoding this jittery signal, depending upon the level of degradation to the signal. In contrast, the lower-layer signal is at much lower power than the upper-layer signal and any imperfection in the recovered upper layer carrier may introduce errors into the extracted lower-layer signal that may cause difficulty in demodulation or decoding of the lower-layer signal.

Therefore, and in accordance with the principles of the invention, a receiver receives a layered modulation signal having at least two signal layers, and recovers a carrier therefrom as a function of soft decisions with respect to one of the at least two layers.

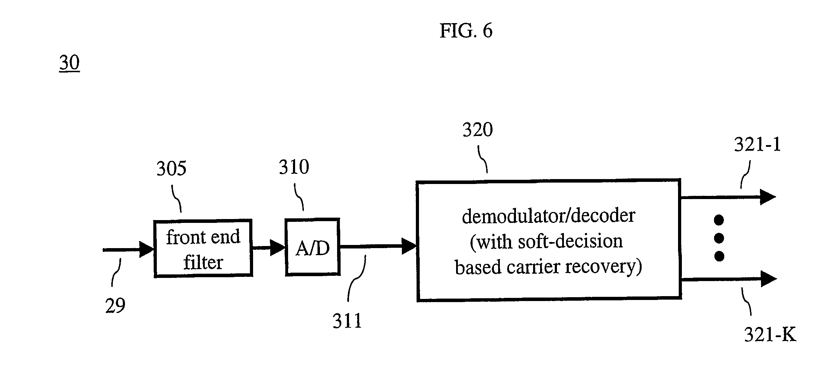

An illustrative portion of receiver 30 in accordance with the principles of the invention is shown in FIG. 6. Receiver 30 includes front end filter 305, analog-to-digital converter 310 and demodulator/decoder 320. The latter, in accordance with the principles of the invention, includes at least one soft-decision based carrier recovery element (circuit and/or process). Front end filter 305 down-converts (e.g., from the satellite transmission bands) and filters received signal 29 to provide a near baseband signal to A/D 310, which samples the down converted signal to convert the signal to the digital domain and provide a sequence of samples 311 (also referred to as multi-level signal 311 or received signal 311) to demodulator/decoder 320. The latter performs layered demodulation of multi-level signal 311 and provides a number of output signals, 321-1 to 321-K, representative of data conveyed by multi-level signal 311 on the *K* layers. Data from one or more of these output signals are provided to TV set 35 via signal 31. (In this regard, receiver 30 may additionally process the data before application to TV set 35 and/or directly provide the data to TV set 35.) In the following example the number of levels is two, i.e., *K* = 2, but the inventive concept is not so limited.

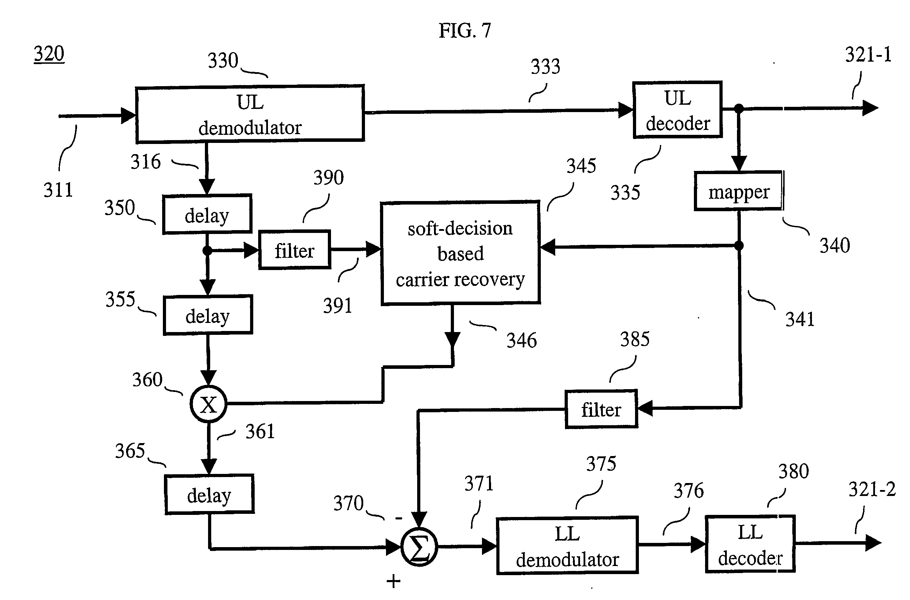

Turning now to FIG. 7, an illustrative embodiment of demodulator/decoder 320 is shown. Demodulator/decoder 320 comprises UL demodulator 330, UL decoder 335, mapper 340, a soft-decision based carrier recover element 345, delay element 350, delay element 355, multiplier 360, delay element 365, combiner 370, LL demodulator 375, LL decoder 380, filter 385 and filter 390. Multi-level signal 311 is applied to UL demodulator 330, which demodulates this signal and provides a resampled multi-level signal 316 and a demodulated UL signal as represented by demodulated UL signal point stream 333. The various delay elements shown in FIG. 7 are used to time synchronize the processing, i.e., take into account the various processing delays. For example, delay element 350 provides a time delay to resampled multi-level signal 316 such that received signal points (signal 391) are correctly compared to corresponding symbols (signal 341) (described further below).

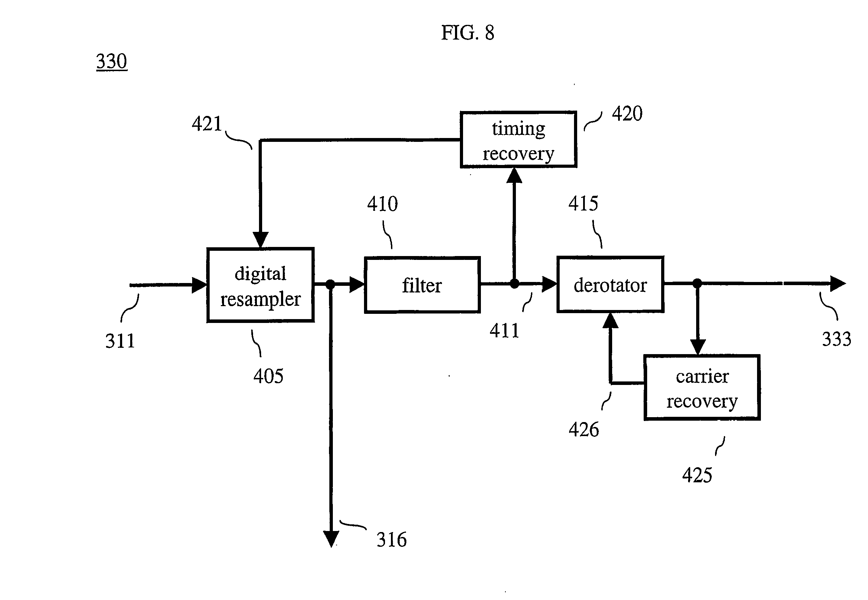

Referring for the moment to FIG. 8, an illustrative block diagram of UL demodulator 330 is shown. UL demodulator 330 includes digital resampler 405, filter 410, derotator 415, timing recovery element 420 and carrier recovery element 425. Multi-level signal 311 is applied to digital resampler 405, which resamples multi-level signal 311 using UL timing signal 421, which is provided by timing recovery element 420, to provide resampled multi-level signal 316. Resampled multi-level signal 316 is applied to filter 410 and is also provided to delay element 350 of FIG. 7. Filter 410 is a band-pass filter for filtering resampled multi-level signal 316 about the UL carrier frequency to provide a filtered signal 411 to both derotator 415 and the above-mentioned timing recovery element 420, which generates therefrom UL timing signal 421. Derotator 415 derotates, i.e., removes the carrier from, filtered signal 411 to provide a demodulated UL signal point stream 333. Carrier recovery element 425 uses the demodulated UL signal point stream 333 to recover UL carrier signal 426, which is applied to derotator 415. It should be noted that, although shown in different form, the combination of derotator 415 and carrier recovery element 425 functionally correspond to carrier recovery circuit 200 of FIG. 3.

Returning back to FIG. 7, UL decoder 335 soft decodes the demodulated UL signal point stream 333 to provide UL signal 321-1, which is a bit stream of *N* bits per upper layer symbol interval $T_{UL}$. UL signal 321-1 represents the recovered encoded data conveyed on the upper layer, e.g., comprising recovered user data plus parity, as represented by signal 106 of FIG. 2. As noted earlier, UL decoder 335 recovers the data conveyed in the UL by, in effect, treating the LL signal as noise on the UL signal. The data portion of UL signal 321-1 is available to other portions of receiver 30 for additional processing (if any).

UL signal 321-1 (data plus parity) is also applied to mapper 340, which re-maps UL signal 321-1 to symbols selected from an upper layer constellation of symbols (or symbol space) (not shown). In other words, mapper 340 operates in a similar fashion to that portion of modulator 115 of FIG. 2 for mapping bits to symbols and remaps UL signal 321-1 to provide symbol stream 341. Since symbol stream 341 is based upon UL signal 321-1 and is subsequent to soft decoding, symbol stream 341 is referred to herein as being based on "soft decisions." In this regard, and in accordance with the principles of the invention, soft-decision based carrier recovery element 345 receives symbol stream 341 and resampled multi-level signal 316 (via delay element 350 and filter 390) to provide a recovered carrier signal 346 based on soft decisions. While filter 390 is similar to the above-described filter 410 of FIG. 8, preferably filter 390 eliminates intersymbol interference (ISI) on the UL component of the combined signal.

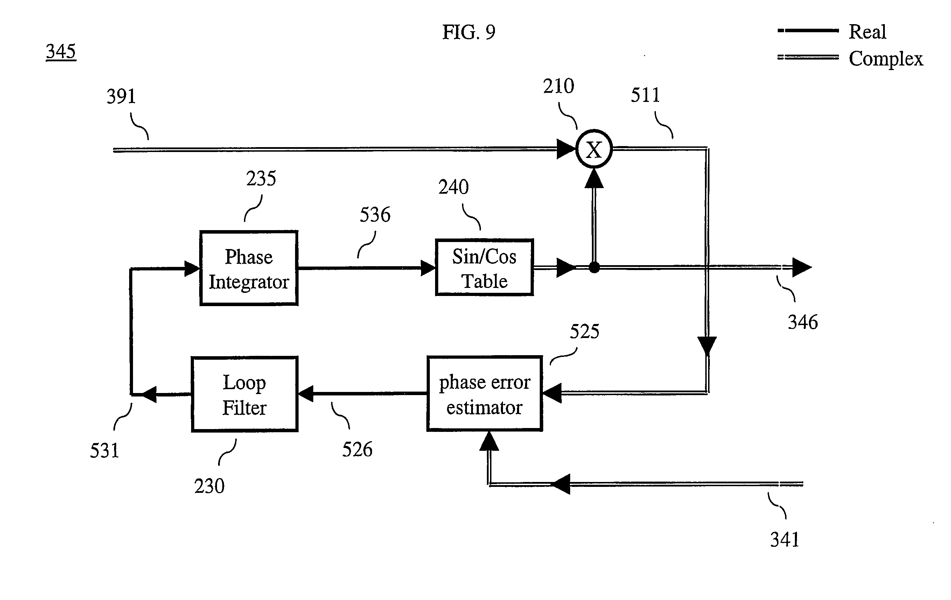

Referring now to FIG. 9, an illustrative block diagram of soft-decision based carrier recovery element 345 in accordance with the principles of the invention is shown. The elements illustrated in FIG. 9 represent one form of a soft-decision based carrier recovery element that can be implemented in either hardware and/or software. Soft decision based carrier recovery element 345 includes complex multiplier 210, phase error estimator 525, loop filter 230, phase integrator 235 and sine/cosine (sin/cos) table 240.

A delayed and filtered version of resampled multi-level signal 316 (signal 391) is applied to complex multiplier 210. As can be observed from FIG. 9, it is assumed that resampled multi-level signal 316 is provided as a complex sample stream comprising in-phase (I) and quadrature (Q) components. It should be noted that complex signal paths are specifically shown as double lines in FIG. 9. Complex multiplier 210 performs de-rotation of signal 391 by recovered carrier signal 346. In particular, the in-phase and quadrature components of signal 391 are rotated by a phase of recovered carrier signal 346, which represents particular sine and cosine values provided by sin/cos table 240. The output signal from complex multiplier 210 is down-converted received signal 511, which represents a de-rotated complex sample stream of received signal points. As can be observed from FIG. 9, down-converted received signal 511 is also applied to phase error estimator 525, which, in accordance with a feature of the invention, computes any phase offset still present in the down-converted signal 511 and provides a phase error estimate signal 526 indicative thereof. The phase error estimate signal 526 is applied to loop filter 230, which further filters the phase error estimate signal 526 to provide a filtered signal 531 that is applied to phase integrator 235. The latter provides an output phase angle signal 536 to sin/cos table 240, which provides the associated sine and cosine values to complex multiplier 210 for de-rotation of signal 391 to provide down-converted received signal 511.

As can be observed from FIG. 9, and in accordance with the principles of the invention, phase error estimator 525 receives symbol stream 341, which, ideally, represents the actual symbols transmitted by transmitter 5 of FIG. 1. As such, during operation the signal points of the down-converted received signal 511 are compared to the corresponding actual transmitted symbols to provide improved phase error estimates and a reduction in jitter in recovered carrier signal 346. Thus, the inventive concept provides for an improvement in the subtraction process, which results in better demodulation and bit-error rates for the lower-layer signal. In particular, phase error estimate signal 526 represents a sequence of phase error estimates, $\phi_{error\_estimate}$, where each particular $\phi_{error\_estimate}$ is determined by calculating the imaginary part of the received signal point times the conjugate of the associated soft-decision based symbol, i.e.,

$$\phi_{error\_estimate} \cong imag(z \bullet z_{soft}^*) = |z| \bullet |z_{soft}| \sin(\angle z - \angle z_{soft}). \qquad (2)$$

In the above equation, Z represents the complex vector of the received signal point, $Z_{soft}$ represents the complex vector of the associated soft-decision based symbol and $z_{soft}^*$ represents the conjugate of the complex vector of the associated soft-decision based symbol. It should be noted that soft decision based carrier recovery element 345 may operate at multiples of (e.g., twice) the symbol rate of symbol stream 341. As such, phase integrator 235 continues to integrate at all sample times.

As described above, the receiver remaps the decoded upper-layer bits into symbols to create the best estimate of the upper-layer transmitted symbol. This estimate is then used in generating a recovered carrier for use in lower-layer signal processing. Consequently, the effect of incorrect decisions upon carrier recovery is reduced or eliminated by using reconstructed symbols - as opposed to sliced received symbols - in a carrier recovery circuit and/or process.

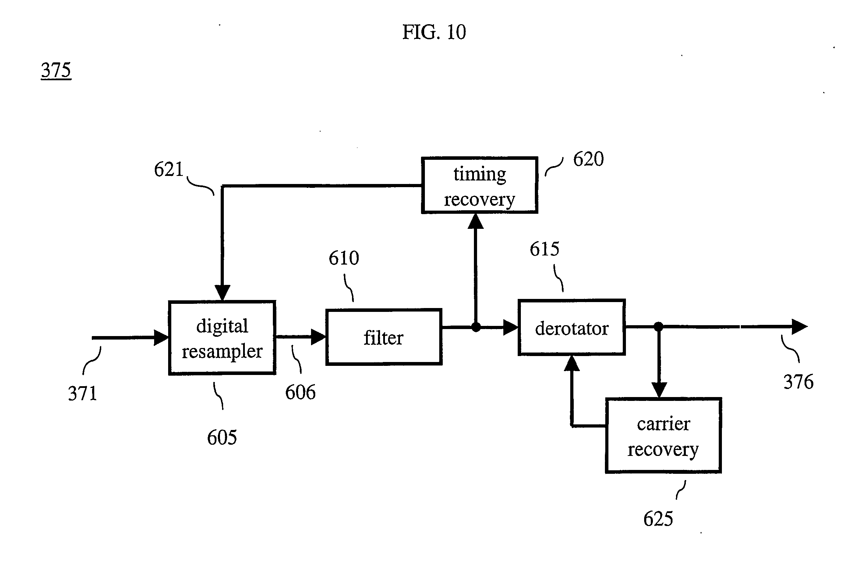

Returning back to FIG. 7, the remainder of the processing is relatively straightforward. Multiplier 360 derotates a delayed version of multi-level signal 316 using soft-decision based recovered carrier signal 346 to provide a derotated signal 361. Illustratively, the delay provided by delay element 355 matches the processing delay incurred by filter 390 and soft-decision based carrier recovery element 345. Likewise, derotated signal 361 is suitably delayed by delay element 365 before application to combiner 370. The latter extracts LL component signal 371 therefrom by subtracting a filtered version of symbol stream 341. The filtered version of symbol stream 341 is provided by filter 385, which pulse shapes symbol stream 341. The LL component signal 371 is applied to LL demodulator 375, which recovers therefrom a demodulated LL signal as represented by demodulated LL signal point stream 376. An illustrative block diagram of LL demodulator 375 is shown in FIG. 10. LL demodulator 375 includes digital resampler 605, filter 610, timing recovery element 620, derotator 615, and carrier recovery element 625. LL modulated signal 371 is applied to digital resampler 605, which resamples LL modulated signal 371 using LL timing signal 621 to bring the LL signal to the initial LL processing rate, which is typically, an integer multiple of the lower layer symbol rate. Digital resampler 605 works in conjunction with timing recovery element 620. Resampled LL modulated signal 606 is applied to filter 610, which is a band-pass filter for filtering and shaping resampled LL modulated signal 606 about the LL carrier frequency to provide a filtered signal to both derotator 615 and the above-mentioned timing recovery element 620, which generates therefrom LL timing signal 621. Derotator 615 derotates the filtered signal to provide a demodulated LL signal point stream 376, which is also applied to carrier recover element 625. The latter uses the demodulated LL signal point stream 376 to provide a recovered LL carrier signal to derotator 615. It should be noted that, although shown in different form, the combination of derotator 615 and carrier recovery element 625 functionally correspond to carrier recovery circuit 200 of FIG. 3.

It should be noted that, depending upon the relative symbol rates of the upper and lower layers, the resampling of the signal out of combiner 370 of FIG. 7 may involve an upsampling stage and associated filtering. In addition, and depending upon linear distortions in the transmission channel, one or more equalizers (not shown) may be instantiated within receiver 30 to remove linear distortions, such as tilts on the signal path in the tuner.

Returning once again to FIG. 7, LL decoder 380 soft decodes the demodulated LL signal point stream 376 to provide LL signal 321-2, which includes the data conveyed on the lower layer, e.g., as represented by signal 4-2 of FIG. 2.

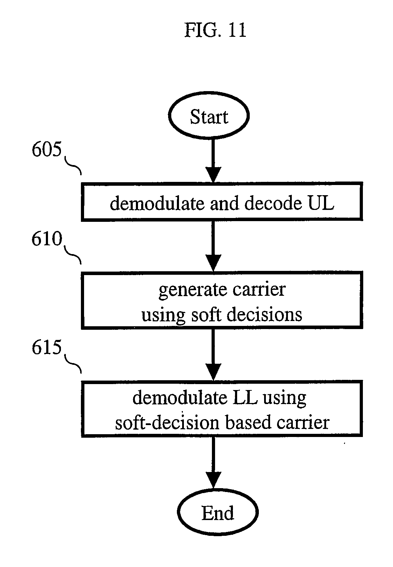

Attention should now be directed to FIG. 11, which shows an illustrative flow chart for use in receiver 30 of FIG. 1. In step 605, receiver 30 demodulates and decodes the received signal to recover the data conveyed therein (the UL data). In step 610, and in accordance with the principles of the invention, receiver 30 performs soft-decision based carrier generation. In particular, receiver 30 re-encodes the recovered UL data (re-encoded UL data) and recovers a carrier from the received signal using the re-encoded UL data. In step 615, receiver 30 demodulates the received signal to provide a LL component signal, which includes derotating the received signal using the soft-decision based recovered carrier.

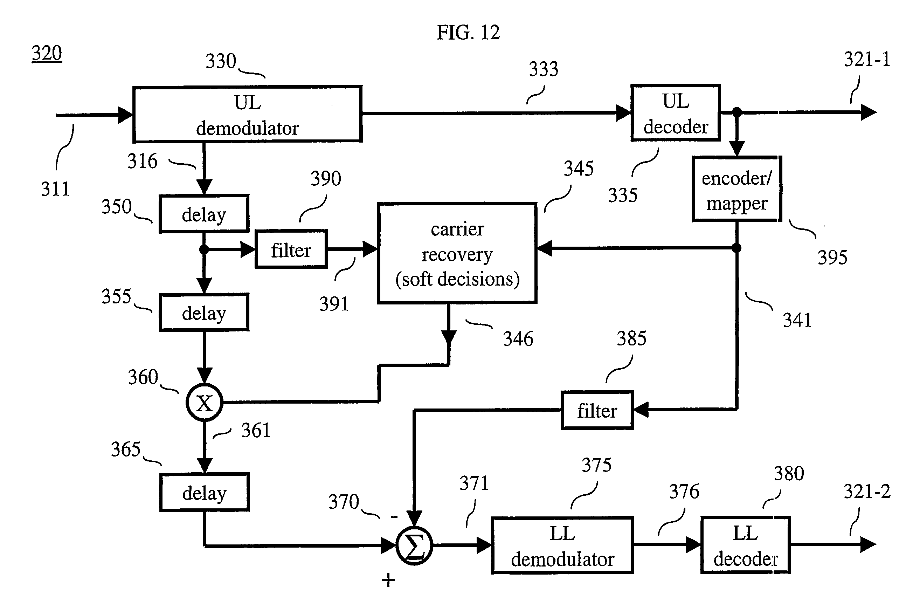

Another illustrative embodiment in accordance with the principles of the invention is shown in FIG. 12. This embodiment is similar to the embodiment shown in FIG. 7 except that UL decoder 335 produces a bit stream only representative of the input data stream 4-1 of FIG. 2. As such, UL decoder 335 includes a decoder that performs functions complementary to those of UL encoder 105 of FIG. 2. Consequently, encoder/mapper 395 re-encodes and maps the bit stream to provide the above-described symbol stream 341.

In view of the above, it should be noted that although described in the context of a satellite communications system, the inventive concept is not so limited and applies to terrestrial broadcast, etc. Also, the inventive concept applies to other types of multi-level modulation, e.g., where one, or more layers, of a multi-level modulation is hierarchically modulated. Likewise, although the inventive concept was described in the context of lower layer processing that uses a carrier recovery circuit based on soft decisions, the inventive concept is not so limited and is applicable to processing any layer of a multi-layered modulation system. For example, there may be more than two layers and one, or more, of the layers may be processed using a carrier recovery circuit based on soft decisions with respect to a predefined symbol constellation. Also, although described in the context of using a recovered carrier based on soft decisions to derotate a received signal, a recovered carrier based on soft decisions can also be used to re-rotate a signal. For example, In order to extract the LL signal component, the receiver regenerates the UL signal and re-rotates the regenerated UL signal using the recovered carrier based on soft decisions. The re-rotated regenerated UL signal is then subtracted from the received signal to extract the LL signal component. Indeed, the inventive concept is also applicable to sequential or simultaneous receiver architectures such as described in international application WO 2004/100479 A1 (THOMSON LICENSING S.A.) 18 November 2004 (18.11.2004) and unified receiver architectures as described in international application WO 2004 105 302 A1 (THOMSON LICENSING S.A.) 2 December 2004 (02.12.2004).

As such, the foregoing merely illustrates the principles of the invention and it will thus be appreciated that those skilled in the art will be able to devise numerous alternative arrangements. For example, although illustrated in the context of separate functional elements, these functional elements may be embodied on one or more integrated circuits (ICs). Similarly, although shown as separate elements, any or all of the elements may be implemented in a stored-program-controlled processor, e.g., a digital signal processor (DSP) or microprocessor that executes associated software, e.g., corresponding to one or more of the steps shown in FIG. 11. Further, although shown as separate elements, the elements therein may be distributed in different units in any combination thereof. For example, receiver 30 may be a part of TV 35 or receiver 30 may be located further upstream in a distribution system, e.g., at a head-end, which then retransmits the content to other nodes and/or receivers of a network. Similarly, either or both UL decoder 335 and LL decoder 380 may be external to element 320, which then is essentially a demodulator that provides at least a demodulated upper layer signal and a demodulated lower layer signal. It is therefore to be understood that numerous modifications may be made to the illustrative embodiments and that other arrangements may be devised without departing from scope of the present invention as defined by the appended claims.

**Claims**

1. A method for use in a receiver, the method comprising:

   demodulating (330) and soft decoding (335) a first layer signal component of a received multi-level modulation signal to provide a decoded first layer signal;
   remapping (340, 395) the decoded first layer signal to provide a remapped first layer signal;
   generating (345) a soft-decision based carrier from the received multi-level modulation signal using the remapped first layer signal; and
   derotating (360) the received multi-level modulation signal with the soft-decision based carrier to provide a derotated version of the received signal and using the derotated version of the received signal and the remapped first layer signal to extract (385, 370) a second layer signal component from the received multi-level modulation signal.

2. The method of claim 1, **characterized in that** the received multi-level modulation signal is a received layered modulation signal.

3. The method of claim 1, **characterized in that** the first layer signal component is an upper layer component and the second layer signal component is a lower layer component.

4. The method of claim 1, **characterized in that** the demodulating step includes the step of derotating the received multi-level modulation signal using the soft-decision based carrier.

5. The method of claim 1, **characterized in that** the generating step includes the step of filtering the received multi-level modulation signal for removing intersymbol interference associated with the first layer signal component.

6. The method of claim 1, **characterized in that** the remapping step includes the step of first reencoding the decoded first layer signal.

7. Apparatus for use in a receiver, the apparatus comprising:

   a first demodulator (330) for demodulating a received signal to provide a demodulated first layer signal;
   a first decoder (335) for soft decoding the demodulated first layer signal to provide a decoded first layer signal;
   a remapper (340, 395) for remapping the decoded first layer signal to provide a remapped first layer signal; and
   a carrier recovery element (345) responsive to the remapped first layer signal and the received signal to provide a soft-decision based carrier;
   a derotator (360) for derotating the received signal with the soft-decision based carrier to provide a derotated version of the received signal; and
   an extractor (385, 370) responsive to the derotated received signal and remapped first layer signal for providing a second layer signal component of the received signal.

8. The apparatus of claim 7, **characterized in that** the extractor comprises a filter (385) for filtering the remapped first layer signal and a subtraction element (370) for subtracting the filtered remapped first layer signal from the derotated version of the received signal.

9. The apparatus of claim 7, further comprising a second demodulator (375) for demodulating the second layer signal component of the received signal to provide a demodulated second layer signal.

10. The apparatus of claim 9, further comprising a second decoder (380) for decoding the demodulated second layer signal to provide a decoded second layer signal.

11. The apparatus of claim 7, **characterized in that** the apparatus is an integrated circuit.

12. The apparatus of claim 7, **characterized in that** the carrier recovery element includes a phase error estimator responsive to the received signal and the remapped first layer signal for estimating phase errors therebetween.

13. The apparatus of claim 7, **characterized in that** the remapper includes an encoder (395) for reencoding the decoded first layer signal.

**14.** The apparatus of claim 7, **characterized in that** the received signal is a layered modulation signal.

**15.** The apparatus of claim 7, **characterized in that** the carrier recovery element further includes a filter for removing intersymbol interference associated with the first layer signal component from the received signal.

**Patentansprüche**

**1.** Verfahren für die Verwendung in einem Empfänger, wobei das Verfahren enthält:

Demodulieren (330) und Soft-Decodieren (335) einer Signalkomponente einer ersten Schicht eines empfangenen Mehrpegel-Modulationssignals, um ein decodiertes Signal der ersten Schicht bereitzustellen; erneutes Abbilden (340, 395) des decodierten Signals der ersten Schicht, um ein neu abgebildetes Signal der ersten Schicht bereitzustellen; Erzeugen (345) eines auf einer Soft-Entscheidung basierenden Trägers aus dem empfangenen Mehrpegel-Modulationssignal unter Verwendung des neu abgebildeten Signals der ersten Schicht; und Derotieren (360) des empfangenen Mehrpegel-Modulationssignals mit dem auf einer Soft-Entscheidung basierenden Träger, um eine derotierte Version des empfangenen Signals bereitzustellen, und Verwenden der derotierten Version des empfangenen Signals und des neu abgebildeten Signals der ersten Schicht, um aus dem empfangenen Mehrpegel-Modulationssignal eine Signalkomponente einer zweiten Schicht zu extrahieren (385, 370).

**2.** Verfahren nach Anspruch 1, **dadurch gekennzeichnet, dass** das empfangene Mehrpegel-Modulationssignal ein empfangenes, Schicht-Modulationssignal ist.

**3.** Verfahren nach Anspruch 1, **dadurch gekennzeichnet, dass** die Signalkomponente der ersten Schicht eine Komponente der oberen Schicht ist und die Signalkomponente der zweiten Schicht eine Komponente der unteren Schicht ist.

**4.** Verfahren nach Anspruch 1, **dadurch gekennzeichnet, dass** der Demodulationsschritt den Schritt des Derotierens des empfangenen Mehrpegel-Modulationssignals unter Verwendung des auf einer Soft-Entscheidung basierenden Trägers enthält.

**5.** Verfahren nach Anspruch 1, **dadurch gekennzeichnet, dass** der Erzeugungsschritt den Schritt des Filterns des empfangenen Mehrpegel-Modulationssignals enthält, um eine Intersymbol-Interferenz, die der Signalkomponente der ersten Schicht zugeordnet ist, zu entfernen.

**6.** Verfahren nach Anspruch 1, **dadurch gekennzeichnet, dass** der Neuabbildungsschritt den Schritt enthält, bei dem zunächst das decodierte Signal der ersten Schicht neu codiert wird.

**7.** Vorrichtung für die Verwendung in einem Empfänger, wobei die Vorrichtung enthält:

einen ersten Demodulator (330) zum Demodulieren eines empfangenen Signals, um ein demoduliertes Signal einer ersten Schicht bereitzustellen; einen ersten Decodierer (335) zum Soft-Decodieren des demodulierten Signals der ersten Schicht, um ein decodiertes Signal der ersten Schicht bereitzustellen; eine Neuabbildungseinrichtung (340, 395) zum erneuten Abbilden des decodierten Signals der ersten Schicht, um ein neu abgebildetes Signal der ersten Schicht bereitzustellen; ein Trägerrückgewinnungselement (345), um in Reaktion auf das neu abgebildete Signal der ersten Schicht und auf das empfangene Signal einen auf einer Soft-Entscheidung basierenden Träger bereitzustellen; eine Derotationseinrichtung (360) zum Derotieren des empfangenen Signals mit dem auf der Soft-Entscheidung basierenden Träger, um eine derotierte Version des empfangenen Signals bereitzustellen; und eine Extraktionseinrichtung (385, 370), um in Reaktion auf das derotierte empfangene Signal und das neu abgebildete Signal der ersten Schicht eine Signalkomponente der zweiten Schicht des empfangenen Signals bereitzustellen.

**8.** Vorrichtung nach Anspruch 7, **dadurch gekennzeichnet, dass** die Extraktionseinrichtung ein Filter (385) zum Filtern des neu abgebildeten Signals der ersten Schicht und ein Subtraktionselement (370) zum Subtrahieren des gefilterten neu abgebildeten Signals der ersten Schicht von der derotierten Version des empfangenen Signals enthält.

9.  Vorrichtung nach Anspruch 7, die ferner einen zweiten Demodulator (375) zum Demodulieren der Signalkomponente der zweiten Schicht des empfangenen Signals enthält, um ein demoduliertes Signal der zweiten Schicht bereitzustellen.

10. Vorrichtung nach Anspruch 9, die ferner einen zweiten Decodierer (380) zum Decodieren des demodulierten Signals der zweiten Schicht enthält, um ein decodiertes Signal der zweiten Schicht bereitzustellen.

11. Vorrichtung nach Anspruch 7, **dadurch gekennzeichnet, dass** die Vorrichtung eine integrierte Schaltung ist.

12. Vorrichtung nach Anspruch 7, **dadurch gekennzeichnet, dass** das Trägerrückgewinnungselement eine Phasenfehler-Schätzeinrichtung enthält, um in Reaktion auf das empfangene Signal und das neu abgebildete Signal der ersten Schicht Phasenfehler zwischen ihnen zu schätzen.

13. Vorrichtung nach Anspruch 7, **dadurch gekennzeichnet, dass** die Neuabbildungseinrichtung einen Codierer (395) zum erneuten Codieren des decodierten Signals der ersten Schicht enthält.

14. Vorrichtung nach Anspruch 7, **dadurch gekennzeichnet, dass** das empfangene Signal ein Schicht-Modulationssignal ist.

15. Vorrichtung nach Anspruch 7, **dadurch gekennzeichnet, dass** das Trägerrückgewinnungselement ferner ein Filter zum Entfernen einer der Signalkomponente der ersten Schicht zugeordneten Intersymbol-Interferenz aus dem empfangenen Signal enthält.

**Revendications**

1.  Procédé destiné à être utilisé dans un récepteur, le procédé comprenant :

    la démodulation (330) et le décodage à décision pondérée (335) d'une composante de signal de première couche d'un signal de modulation à niveaux multiples reçu afin de produire un signal de première couche décodé ;
    le remappage (340, 395) du signal de première couche décodé afin de produire un signal de première couche remappé ;
    la génération (345) d'une porteuse basée sur une décision pondérée à partir du signal de modulation à niveaux multiples reçu en utilisant le signal de première couche remappé ; et
    le redressement (360) du signal de modulation à niveaux multiples reçu avec la porteuse basée sur une décision pondérée afin de produire une version redressée du signal reçu et l'utilisation de la version redressée du signal reçu et du signal de première couche remappé afin d'extraire (385, 370) une composante de signal de deuxième couche à partir du signal de modulation à niveaux multiples reçu.

2.  Procédé selon la revendication 1, **caractérisé en ce que** le signal de modulation à niveaux multiples reçu est un signal de modulation en couches reçu.

3.  Procédé selon la revendication 1, **caractérisé en ce que** la composante de signal de première couche est une composante de couche supérieure et la composante de signal de deuxième couche est une composante de couche inférieure.

4.  Procédé selon la revendication 1, **caractérisé en ce que** l'étape de démodulation comporte l'étape de redressement du signal de modulation à niveaux multiples reçu en utilisant la porteuse basée sur une décision pondérée.

5.  Procédé selon la revendication 1, **caractérisé en ce que** l'étape de génération comporte le filtrage du signal de modulation à niveaux multiples reçu pour supprimer une interférence inter-symboles associée à la composante de signal de première couche.

6.  Procédé selon la revendication 1, **caractérisé en ce que** l'étape de remappage comporte l'étape de ré-encodage préalable du signal de première couche décodé.

**7.** Appareil destiné à être utilisé dans un récepteur, l'appareil comprenant :

un premier démodulateur (330) pour démoduler un signal reçu afin de produire un signal de première couche démodulé ;

un premier décodeur (335) pour décoder par décision pondérée le signal de première couche démodulé afin de produire un signal de première couche décodé ;

un remappeur (340, 395) pour remapper le signal de première couche décodé afin de produire un signal de première couche remappé ; et

un élément de récupération de porteuse (345) sensible au signal de première couche remappé et au signal reçu pour fournir une porteuse basée sur une décision pondérée ;

un dérotateur (360) pour redresser le signal reçu avec la porteuse basée sur une décision pondérée afin de produire une version redressée du signal reçu ; et

un extracteur (385, 370) sensible au signal reçu redressé et au signal de première couche remappé pour fournir une composante de signal de deuxième couche du signal reçu.

**8.** Appareil selon la revendication 7, **caractérisé en ce que** l'extracteur comprend un filtre (385) pour filtrer le signal de première couche remappé et un élément de soustraction (370) pour soustraire le signal de première couche remappé filtré de la version redressée du signal reçu.

**9.** Appareil selon la revendication 7, comprenant en outre un second démodulateur (375) pour démoduler la composante de signal de deuxième couche du signal reçu afin de produire un signal de deuxième couche démodulé.

**10.** Appareil selon la revendication 9, comprenant en outre un second décodeur (380) pour décoder le signal de deuxième couche démodulé afin de produire un signal de deuxième couche décodé.

**11.** Appareil selon la revendication 7, **caractérisé en ce que** l'appareil est un circuit intégré.

**12.** Appareil selon la revendication 7, **caractérisé en ce que** l'élément de récupération de porteuse comporte un estimateur d'erreur de phase sensible au signal reçu et au signal de première couche remappé pour estimer des erreurs de phase entre eux.

**13.** Appareil selon la revendication 7, **caractérisé en ce que** le remappeur comporte un codeur (395) pour ré-encoder le signal de première couche décodé.

**14.** Appareil selon la revendication 7, **caractérisé en ce que** le signal reçu est un signal de modulation en couches.

**15.** Appareil selon la revendication 7, **caractérisé en ce que** l'élément de récupération de porteuse comporte en outre un filtre pour éliminer l'interférence inter-symboles associée à la composante de signal de première couche du signal reçu.

FIG. 1

EP 1 716 682 B1

FIG. 2

*Prior Art*

EP 1 716 682 B1

105

106

115

116

125

| UL encoder | | UL modulator | | up converter |

4-1

N

6-1

6

110

111

120

121

130

| LL encoder | | LL modulator | | up converter |

4-2

M

6-2

FIG. 3

*Prior Art*

Real

Complex

EP 1 716 682 B1

14

FIG. 4

*Prior Art*

EP 1 716 682 B1

FIG. 5

*Prior Art*

89

FIG. 6

30

305    310         320                    321-1

front end    A/D     demodulator/decoder
filter                (with soft-decision
                      based carrier recovery)

29          311                           321-K

EP 1 716 682 B1

FIG. 7

EP 1 716 682 B1

FIG. 8

330

FIG. 9

Real — Complex ===

EP 1 716 682 B1

FIG. 10

375

EP 1 716 682 B1

FIG. 11

EP 1 716 682 B1

FIG. 12

EP 1 716 682 B1

**EP 1 716 682 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02089371 A1
- WO 2004100479 A1
- WO 2004105302 A1